# FASCICULE DE BREVET EUROPEEN

(11) **EP 4 010 776 B1**
(45) Date de publication et mention de la délivrance du brevet: **18.06.2025**
(21) Numéro de dépôt: 20757652.1
(22) Date de dépôt: 06.08.2020
(51) Int. Cl.: G05G 5/06, G05G 1/08, G05G 9/047, G06F 3/01, G06F 3/0362, H01H 19/11

(54) **INTERFACE HAPTIQUE PASSIVE**
PASSIVE HAPTISCHE SCHNITTSTELLE
PASSIVE HAPTIC INTERFACE

(30) Priorité: 07.08.2019 FR 1909057
(43) Date de publication de la demande: 15.06.2022
(73) Titulaire: Moving Magnet Technologies, 25000 Besançon (FR)
(72) Inventeur: ALZINGRE, Jean-Daniel, 25720 LARNOD (FR); FOUCAUT, Antoine, 70190 Montarlot les Rioz (FR); PAJOT, Olivier, 1092 Belmont-sur-Lausanne (CH)
(74) Mandataire: IP Trust
(86) Numéro de dépôt international: PCT/FR2020/051444
(87) Numéro de publication internationale: WO 2021/023951

(56) Documents cités:
- EP-A2- 1 167 109
- WO-A1-2013/023922
- WO-A1-2018/116569
- WO-A1-2020/074605
- CN-A- 108 400 046
- FR-A1- 2 908 903
- JP-A- 2016 170 886

## Description

### DOMAINE TECHNIQUE DE L'INVENTION

L'invention se rapporte à une interface haptique passive, c'est-à-dire pouvant être manipulée par le doigt ou la main voir éventuellement par le pied d'un utilisateur et fournissant un effort variable ressenti et cela sans consommation électrique.

La présente invention s'applique par exemple à une interface de commande informatique bureautique ou une interface de commande à l'intérieur d'un véhicule motorisé ou encore une interface de commande d'un appareil électroménager.

### ETAT DE LA TECHNIQUE ANTERIEURE

Il est connu des dispositifs haptiques manuels, utilisant une interaction magnétique entre une partie fixe et une partie mobile, ces deux parties étant en regard et comportant soit chacun un aimant, soit l'un comportant un aimant et l'autre un élément ferromagnétique doux découpé pour former différents pôles magnétiques.

Le brevet français FR2908903 décrit un dispositif d'indexation comprenant un organe de commande mobile maintenu dans au moins une position d'indexation par un moyen de crantage. Ce brevet décrit différentes solutions, prévoyant toujours :
a) un élément métallique présentant des protubérances,
b) un aimant ou deux aimants présentant chacun un pôle dirigé vers l'élément métallique et un deuxième pôle dirigé du côté opposé à l'élément métallique.

Cette solution présente plusieurs inconvénients. L'interaction magnétique assurant l'indexation est concentrée sur une (dans le cas d'un aimant) ou deux dents (dans le cas de deux aimants diamétralement opposés), ce qui implique une force d'attraction assez élevée et localisée. La conséquence est un ratio couple/volume d'aimant médiocre.

De plus les solutions proposées par ce brevet se heurte à un problème d'encombrement limitant les possibilités de miniaturisation : lorsque le nombre de protubérances formées sur l'élément métallique devient important, il est nécessaire de réduire la section de l'aimant ou de la paire d'aimants, afin d'éviter que le champ magnétique engendré n'interagisse avec plusieurs protubérances voisines. Mais en réduisant la section de l'aimant, on perd du couple, et la résistance d'indexation s'atténue jusqu'à ne plus être perceptible. La résolution de l'indexation est limitée par la taille des pas interdentaires, qui doit être supérieure à la taille de l'aimant. Ces réalisations ne permettent donc pas d'atteindre des résolutions d'indexation élevées.

On connaît aussi le brevet chinois CN108400046 décrivant un dispositif formé par une surface annulaire et plusieurs aimants statiques disposés alternativement sur la surface annulaire et au moins pourvu de 2 pièces d'aimants mobiles opposés sur les composants rotatifs. Les aimants mobiles et statiques sont disposés séquentiellement pour effectuer la répulsion homopolaire et l'attraction hétéropolaire.

Cette solution n'est pas satisfaisante car elle présente également une grande raideur et une résolution médiocre, nécessairement limité au pas des aimants. Par ailleurs, elle nécessite un grand nombre d'aimants pour réaliser un grand nombre de crans. Cette solution présente aussi des difficultés d'industrialisation, car elle nécessite l'assemble complexe de pièces de petites dimensions.

La demande de brevet EP1167109 décrit un dispositif de génération de positions de sélection qui comprend au moins un corps de base qui est entouré au moins partiellement par un boîtier, qui porte un corps discoïdal, qui est maintenu par rapport au corps de base au moyen d'un agencement magnétique de position de base et qui doit être déplacé par rapport au corps de base, et comprend aussi un agencement de position au moyen duquel doit être déterminée au moins la position du corps discoïdal par rapport au boîtier. Il comprend au moins un corps de stator incluant au moins un élément magnétique et un évidement de guidage d'arbre, le corps de base consiste en un corps creux de rotor qui doit être déplacé par rapport aux éléments magnétiques et qui inclut au moins une couronne dentée d'indicateur de position incluant au moins une dent d'indicateur de position, et un élément d'arbre qui est agencé dans l'évidement de guidage d'arbre, et en ce qu'un évidement de corps discoïdal est ménagé dans le boitier. Cette réalisation ne permet qu'une résolution médiocre car le nombre de crans est limité au nombre de dents qu'il est possible de faire, phasées et alignées avec le stator.

Le brevet WO2013023922 décrit un dispositif de commande comportant un élément d'actionnement avec retour haptique, cet élément présentant une surface de commande sensible au toucher, ledit élément d'actionnement pouvant être actionné par un opérateur à l'aide d'un organe de saisie. Ce dispositif comporte un premier et un second composant plat composés d'un matériau ferromagnétique et orientés de manière à ce que leurs grandes surfaces soient parallèles entre elles, le premier composant plat pouvant être entraîné en translation de manière guidée horizontalement par rapport au second composant plat qui reste fixe, le premier composant plat formant l'élément de commande ou transmettant entièrement ou partiellement son mouvement à l'élément de commande. Ce dispositif comporte également une bobine ou un conducteur électrique disposé(e) entre les composants plats et affecté(e) à un premier épanouissement polaire qui est relié au second composant plat et fait saillie par rapport au premier composant plat. En appliquant un courant à la bobine ou au conducteur, il est possible de créer un champ magnétique par lequel le premier composant plat peut, à partir d'une position de repos, être entraîné en translation horizontale par rapport au second composant plat vers une position de déplacement.

Cette solution n'est pas passive mais nécessite une alimentation électrique des bobines pour alimenter les bobines.

Le brevet JP2016170886 décrit un dispositif comprenant un capteur comprenant un premier élément formé par une pluralité de parties aimantées à des intervalles angulaires prédéterminés le long d'une direction circonférentielle, et un deuxième élément utilisant la pluralité de premiers aimants. Une deuxième partie aimantée à un intervalle angulaire prédéterminé le long de la direction circonférentielle, est positionnée de manière à pouvoir faire face à une partie aimantée du côté extérieur dans la direction circonférentielle, et selon l'opération de rotation.

Le brevet WO2020074605 décrit un actionneur rotatif magnétique pour une unité de commande de véhicule automobile, avec une partie fixe et un élément rotatif qui peut être tourné par rapport à la partie stationnaire, l'actionneur rotatif magnétique ayant une sensation de verrouillage magnétique qui comprend un une pluralité de positions de verrouillage magnétique, et la partie fixe et l'élément rotatif comprennent chacun au moins deux éléments magnétiques formés séparément qui coopèrent pour générer la pluralité de positions de détente magnétique. Pour chaque cran, un seul aimant du rotor participe au couple, on a une asymétrie des efforts et un mauvais ratio entre volume d'aimants et couple produit.

Dans ces dispositifs, il est possible de donner la sensation à l'utilisateur de passer une succession de crans lors de la manipulation de l'élément mobile, le nombre de crans qui se succèdent étant déterminé par le nombre de polarités magnétiques la plus élevée sur chacune des pièces. Ces crans correspondent aux différentes positions stables magnétiques entre les parties fixe et mobile. Par exemple, dans le brevet FR2908903, si la partie ferromagnétique comprend 16 motifs périodiques et la partie aimantée comprend 2 aimants, le nombre de crans ressentis est alors de 16 sur une rotation complète de la partie mobile.

Lorsqu'il y a besoin de créer un nombre important de crans, par exemple 72, sur une rotation complète de la partie mobile (ou sur un angle ou un déplacement linéaire donné), ces dispositifs de l'art antérieur présentent l'inconvénient d'imposer un nombre important d'aimants ou de pôles ferromagnétiques. Lorsque ce nombre relativement important de crans est couplé à un besoin de miniaturisation, la difficulté de réalisation industrielle de la solution devient alors importante avec des éléments de petites tailles difficiles à réaliser par le jeu de tolérances serrées à tenir.

Par ailleurs, dans de nombreux dispositifs haptiques, il est souvent nécessaire d'implémenter un capteur de position afin de pouvoir contrôler le fonctionnement d'un appareil comme par exemple le déplacement d'un pointeur informatique lorsque l'interface haptique est une souris, ou d'un curseur sur un écran de tableau de bord, ces exemples n'étant pas limitatifs. Les dispositifs de l'art antérieur utilisent souvent des capteurs optiques ou magnétiques qui sont simplement placés à proximité du dispositif haptique, rendant la solution soit volumineuse soit peu économique.

### EXPOSE DE L'INVENTION

La présente invention vise à pallier les inconvénients de l'état de la technique en permettant une réalisation industrielle plus économique des éléments mobiles et fixes d'une interface haptique passive aimantée, passif, c'est-à-dire que l'effet haptique est obtenu sans alimentation électrique.

Pour ce faire, la présente invention propose de réaliser un nombre déterminé de crans ressentis par l'utilisateur par association d'une partie fixe et d'une partie mobile, présentant chacun moins de pôles magnétiques que le nombre de crans ressentis, tout en restant passif, c'est-à-dire sans utilisation de bobine électrique et sans consommation d'énergie électrique.

Il est aussi dans l'objet de l'invention que de proposer une solution simple et économique afin d'installer un capteur de position dans un dispositif haptique.

Plus précisément, l'invention a pour objet une interface haptique passive comprenant un premier élément mobile en rotation autour d'un axe ou en translation suivant un axe, ledit premier élément mobile tournant ou se déplaçant en regard d'un deuxième élément fixe, ledit premier élément mobile présentant une première pluralité de pôles magnétiques périodiquement espacés selon un pas polaire Ps et selon la direction de déplacement, ledit deuxième élément fixe présentant une deuxième pluralité de pôles magnétiques périodiquement espacés selon un pas polaire Pr et selon la direction de déplacement, où Ps et Pr sont des nombres différents l'un de l'autre, un effort périodique étant créé par l'interaction magnétique entre lesdits premier élément mobile et deuxième élément fixe selon une période Pt caractérisée en ce que Ps et Pr sont choisis tels que Pt est strictement inférieur au plus petit des pas Ps et Pr.

De manière préférentielle, l'élément magnétique est constitué par un seul aimant présentant une aimantation variant périodiquement.

Par pluralité de pôles magnétiques, on entend un nombre significatif, supérieur à 4, avec une répartition régulière et constante.

De manière préférentielle, le nombre de périodes dudit effort périodique est égal au plus petit commun multiple des nombres de périodes de pôles magnétiques audit premier élément mobile et audit deuxième élément fixe.

Dans une variante, l'un desdits premier élément mobile ou deuxième élément fixe comprend un aimant permanent cylindrique présentant une alternance de pôles Nord et Sud formant ladite première pluralité de pôles magnétiques, l'autre desdits premier élément mobile ou deuxième élément fixe présente une pluralité de dents reliées par une couronne et formant ladite deuxième pluralité de pôles magnétiques, lesdites dents et couronne étant en un matériau ferromagnétique doux, ladite période Pt d'interaction magnétique étant au moins deux fois inférieure au plus petit des pas Ps et Pr. En effet, le plus petit commun multiple entre Ps et Pr, dans le cas d'une réalisation rotative fermée, correspond à une valeur au minimum deux fois supérieure au nombre de pôles magnétiques total.

Dans une autre variante, ledit premier élément mobile et ledit deuxième élément fixe comprennent un aimant permanent présentant une alternance de pôles Nord et Sud formant lesdits pas polaires Ps et Pr.

De manière alternative, le deuxième élément fixe comprend un aimant présentant une aimantation unidirectionnelle orientée selon ledit axe et il comprend de part et d'autre, axialement, deux disques (7a, 7b) ferromagnétiques en fer doux prolongés radialement et chacun par une pluralité 2π/Ps de dents (42) périodiques espacées dudit pas polaire Ps exprimé en radians.

Selon une variante, le deuxième élément fixe comprend un aimant présentant une aimantation unidirectionnelle orientée selon ledit axe et il comprend de part et d'autre, axialement, deux disques ferromagnétiques en fer doux prolongés radialement et chacun par une pluralité 2π/(2*Ps) de dents périodiques espacées dudit pas polaire Ps multiplié par 2 et espacées entre chaque disque dudit pas Ps exprimé en radians.

Selon une autre variante, le premier élément mobile comprend deux disques de part et d'autre, axialement, d'un aimant permanent unipolaire et le deuxième élément fixe comprend un disque en un matériau ferromagnétique doux, lesdits disques étant chacun prolongés radialement par des dents, respectivement, en regard radialement et espacées par ledit pas Ps.

L'invention concerne aussi une interface haptique passive linéaire caractérisée en ce que ledit premier élément mobile comprend un aimant permanent aimanté transversalement au mouvement dudit premier élément mobile selon ledit axe et positionné transversalement entre deux éléments dentés en un matériau ferromagnétique doux présentant des dents et en ce que le deuxième élément fixe est en matériau ferromagnétique comprenant des dents formant des barreaux et s'étendant linéairement, ledit premier élément fixe se déplaçant linéairement au-dessus du deuxième élément fixe.

L'invention concerne aussi une interface haptique passive sphérique caractérisée en ce que ledit premier élément mobile comprend une rotule capable de se déplacer en rotation autour de trois axes orthogonaux, en ce que ladite rotule comprend un ensemble de dents s'étendant radialement, en ce que le deuxième élément fixe est formé d'une pluralité d'éléments fixes sous la forme d'un empilement de tôles en matériau ferromagnétique doux de part et d'autres d'aimants permanents discrets orientés perpendiculairement audites tôles, lesdites tôles étant prolongées radialement par des dents en regard de ladite rotule.

Il est aussi dans l'objet de l'invention que de permettre la réalisation économique d'une interface haptique. Particulièrement l'invention se réfère à une interface haptique rotative, le premier élément mobile comprenant une couronne d'aimants permanents s'étendant axialement solidaire d'une partie discale, ladite partie discale étant prolongée axialement dans une direction opposée auxdits aimants par un plateau aimanté utilisé pour la détection de position dudit premier élément mobile, et le deuxième élément fixe comprenant une couronne en un matériau ferromagnétique doux prolongée par des dents en vis-à-vis de ladite couronne d'aimants permanents.

Selon une variante, ladite couronne d'aimants, ladite partie discale et ledit plateau aimanté sont réalisés dans un seul matériau à liant plastique injecté qui peut s'aimanter de manière permanente.

Dans une autre variante, ladite partie discale est réalisée en un matériau à liant plastique injecté sur lequel est fixé solidairement ledit plateau aimanté.

Enfin, ledit plateau peut être réalisé en un matériau à liant plastique injecté sur ladite partie discale.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, une vue de coupe partielle d'un dispositif selon un premier mode de réalisation de l'invention ;
- la figure 2, une vue de coupe partielle d'un dispositif selon un deuxième mode de réalisation de l'invention ;
- la figure 3, une vue en perspective d'un dispositif selon un troisième mode de réalisation de l'invention ;
- la figure 4, une vue de coupe partielle d'un dispositif selon un quatrième mode de réalisation de l'invention ;
- la figure 5, une vue en perspective d'un dispositif selon un cinquième mode de réalisation de l'invention ;
- la figure 6, une vue en perspective d'un dispositif selon un sixième mode de réalisation de l'invention ;
- la figure 7, une vue en perspective d'un dispositif selon un septième mode de réalisation de l'invention ;
- la figure 8, une vue en perspective d'un dispositif selon un huitième mode de réalisation de l'invention ;
- la figure 9, une vue en perspective d'un dispositif selon un neuvième mode de réalisation de l'invention ;
- la figure 10, une vue en perspective d'un dispositif selon une alternative de de réalisation à la figure 9, selon l'invention ;
- la figure 11, une vue en perspective d'un dispositif selon une variante linéaire de l'invention ;
- la figure 12, une vue en perspective d'une variante sphérique de réalisation de l'invention,
- les figures 13a et 13b, deux vues d'une même réalisation alternative d'un dispositif selon l'invention,
- les figures 14a et 14b, deux vues d'une même autre réalisation alternative d'un dispositif selon l'invention,
- la figure 15, une autre variante rotative de la figure 4,
- la figure 16, une variante rotative qui utilise deux aimants permanents.

### DESCRIPTION DETAILLEE D'UN MODE DE REALISATION

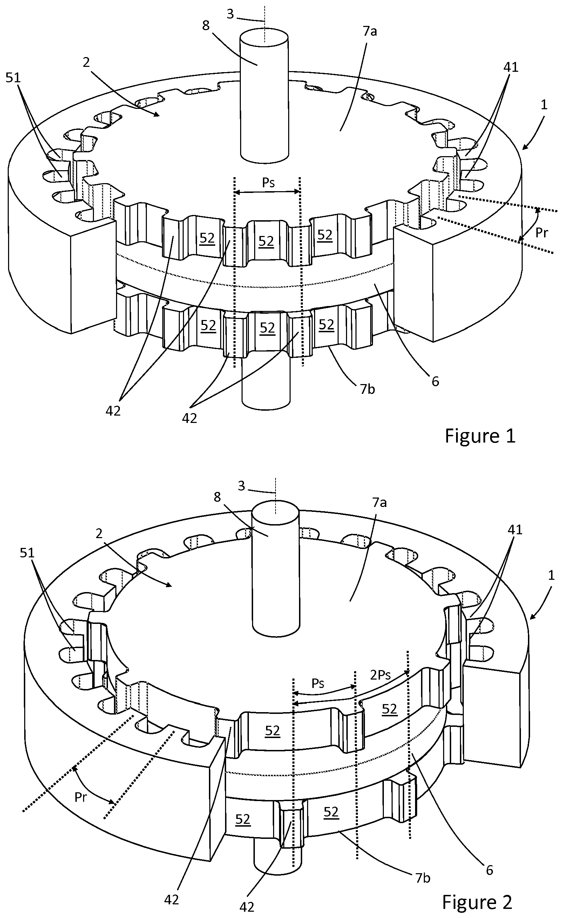

La figure 1 représente un premier mode de réalisation d'une interface haptique rotative selon l'invention. Il comprend un premier élément mobile (1) sous la forme ici d'une couronne dont la surface extérieure est cylindrique et peut éventuellement être texturée (non visible ici) afin d'améliorer la prise en main ou l'actionnement digital par un utilisateur. La surface intérieure de cet élément mobile (1) présente une succession de dents (41), orientées radialement relativement à l'axe (3) de rotation, et d'encoches (51), définissant un pas polaire Pr. Ce premier élément mobile (1) est en matériau ferromagnétique doux, par exemple un acier ou un alliage de fer. A l'intérieur de ce premier élément mobile (1) et en regard, radialement, du premier élément mobile (1) est positionné un deuxième élément fixe (2). Ce dernier comprend un aimant permanent (6) sous la forme d'un disque dont l'aimantation est dirigée axialement. De part et d'autre de cet aimant (6), axialement, sont positionnés deux disques (7a, 7b) ferromagnétiques en fer doux prolongés chacun radialement par une pluralité 2π/Ps de dents (42) périodiques espacées d'un pas polaire Ps, avec Ps exprimé en radians et d'autant d'encoches (52). Les dents (42) s'étendent radialement en direction du premier élément mobile (1). Les disques (7a, 7b) ainsi que l'aimant (6) sont ici solidaires d'un arbre (8) qui sert à positionner et à guider les premier (1) et deuxième (2) éléments, cet arbre (8) s'étendant selon l'axe de rotation (3).

Les disques (7a, 7b) présentent chacun, et dans cet exemple, 18 dents (42), chaque dent d'un disque (7a) étant alignée radialement avec une dent de l'autre disque (7b) de manière symétrique par rapport au plan médian transversal de l'aimant (6). Le premier élément mobile (1) présente un ensemble de 24 dents (41), une partie de ces dents n'étant pas visibles du fait de la coupe partielle réalisée sur le premier élément mobile (1). Du fait de l'aimant permanent (6) dont le flux magnétique passe par l'ensemble des dents (41, 42), ces dernières forment des pôles magnétiques s'attirant afin de maximiser le flux magnétique global passant dans l'entrefer entre le premier élément mobile (1) et le deuxième élément fixe (2), entre les dents (41) et (42). Il est ainsi formé un ensemble de positions stables et instables et un effort périodique qui peut être ressenti par l'utilisateur activant le premier élément mobile (1), sous la forme de crans successifs. Du fait du nombre différent de dents (41, 42) entre le premier élément mobile (1) et le deuxième élément fixe (2), le nombre de crans ressentis est alors égal au plus petit commun multiple (ppcm) des deux nombres de pôles magnétiques au premier élément mobile (1) et au deuxième élément fixe (2). Dans cet exemple, le nombre de crans ressentis sera ainsi de 72, ppcm de 18 et 24. L'amplitude du couple créé et ressenti par l'utilisateur peut être ajustée par la dimension axiale des premier (1) et deuxième (2) éléments ainsi que par l'entrefer entre la première partie mobile (1) et la deuxième partie fixe (2). La forme des dents (41, 42) permet aussi de jouer sur ce paramètre ainsi que sur la forme du couple obtenu sur une période.

La figure 2 présente une variante de réalisation de la figure 1 pour laquelle seuls les disques (7a, 7b) différent. Chacun de ces disques présentent 8 dents (42), les dents (42) de chaque disque (7a, 7b) étant déphasées angulairement d'une demi-période de manière à ce qu'une dent (42) du disque (7a) est alignée avec le milieu d'une encoche (52) du disque (7b) et vice-versa. Cette variante permet de minimiser le nombre de dents à réaliser sur chacun des disques tout en conservant le même nombre de crans ressentis par l'utilisateur, ici 72. L'amplitude de la sensation haptique est cependant plus faible dans ce cas de figure par rapport au premier mode présenté en figure 1, du fait de la réluctance magnétique plus importante générée. Dans ce mode de réalisation, les disques (7a, 7b) sont prolongés radialement chacun par une pluralité 2π /(2*Ps) de dents périodiques espacées dudit pas polaire Ps multiplié par 2 et espacées entre chaque disque dudit pas Ps exprimé en radians.

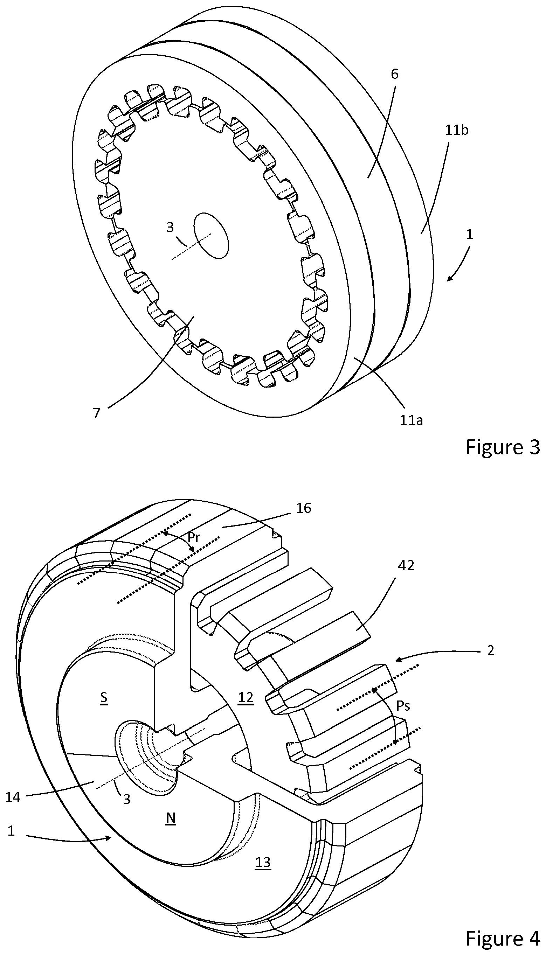

La figure 3 présente une variante de réalisation de la figure 1 pour laquelle la position de l'aimant (6) est différente, ici installée dans le premier élément mobile (1), entre deux disques (11a, 11b) dentés. L'aimant (6) est sous la forme d'une couronne aimantée axialement. Le deuxième élément fixe (2) est sous la forme d'un seul disque (7) denté. Dans cet exemple comme dans tous les exemples donnés ici, le plus grand nombre de dents peut être installé soit sur le premier élément mobile (1) soit sur le deuxième élément fixe (2) sans que cela ne sorte de la présente invention. De même, comme dans les autres exemples de réalisation montrés, un arbre (8) n'est pas systématiquement nécessaire ni montré. Enfin, pour des réalisations rotatives, le premier élément mobile (1) peut être installé à l'extérieur ou à l'intérieur du deuxième élément fixe (2).

La figure 4 présente une variante pour laquelle l'interaction magnétique est réalisée via un entrefer radial entre le premier élément mobile (1) et le deuxième élément fixe (2). Le deuxième élément fixe (2) présente une couronne (12) prolongée axialement par un ensemble de dents (42) en matériau ferromagnétique doux en vis-à-vis radialement avec une couronne d'aimant (16) au premier élément mobile (1). Ce premier élément mobile (1) est ici sous la forme d'une seule et même pièce, en un matériau injectable qui peut s'aimanter de manière permanente, tel un aimant à liant plastique. La couronne d'aimant (16) est ainsi prolongée radialement par une partie discale (13), elle-même prolongée axialement par un plateau (14) aimanté. Ce plateau (14) présente ici, de manière non limitative, deux pôles aimantés axialement (N, S). Ces deux pôles aimantés (N, S) ne sont pas destinés à coopérer magnétiquement avec les dents (42) du deuxième élément fixe (2) mais sont destinés à une fonction de détection de la position du premier élément mobile lorsque ces pôles aimantés (N, S) sont à vis-à-vis d'une sonde de Hall ou une sonde magnéto résistive par exemple (non montrée ici).

Cette solution de la figure 4 est particulièrement intéressante dans le but de réaliser une solution industrielle économique notamment lorsque réalisée dans une petite taille (typiquement d'un diamètre total inférieur à 20 mm). En effet, outre l'intérêt principal proposé par la présente invention, lié à l'utilisation d'un nombre différent de pôles magnétiques en regard dans le but de créer un nombre supérieur de crans ressentis par l'utilisateur, facilitant la réalisation industrielle, la fabrication en une seule pièce du premier élément mobile (1) et en un matériau qui peut s'aimanter est particulièrement pratique et économique, notamment dans l'optique d'implémenter un capteur de position. Cette fonction de détection de la position sera notamment intéressante lorsque l'interface haptique pilote un logiciel informatique ou une fonction électrifiée dans un véhicule.

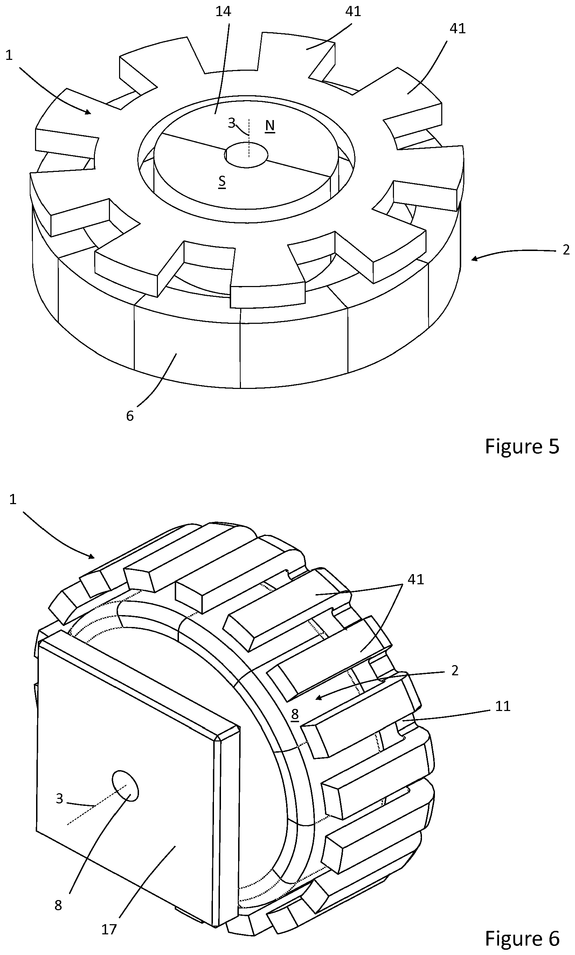

La figure 5 présente une variante de réalisation axiale, c'est-à-dire pour laquelle le premier élément mobile (1) est en regard, axialement, du deuxième élément fixe (2). Dans cet exemple et plus particulièrement, les dents (41) du premier élément mobile (1), sous la forme d'un matériau ferromagnétique doux, s'étendent radialement et font face axialement à la couronne d'aimant (6) du deuxième élément fixe (2). Le premier élément mobile (1) présente 9 dents (41) et le deuxième élément fixe (2) présente un aimant (6) à 12 pôles Nord et Sud de manière à créer 36 crans ressentis. La direction d'aimantation est ici radiale ou préférentiellement axiale, ce qui permet de modifier l'amplitude de couple ressenti. Toujours dans cet exemple, le premier élément mobile (1) peut devenir fixe et le deuxième élément fixe (2) peut devenir mobile, sans que cela ne change la fonction générale décrite. De même, dans cet exemple et au centre du dispositif, est présenté un plateau (14) aimanté constitué d'un pôle nord (N) et d'un pôle sud (S) servant à la détection de la position relative des deux éléments (1 et 2) lorsque ce plateau (14) est en vis-à-vis d'une sonde magnétosensible (non montrée ici).

La figure 6 présente une alternative à l'exemple présenté en figure 4 pour lequel le premier élément mobile (1) présente des dents (41) s'étendant axialement à partir d'un plateau (11), l'ensemble étant en un matériau ferromagnétique doux. Le deuxième élément fixe (2) présente une bague aimantée (6) comprenant une alternance de pôles nord et sud orientés radialement et faisant face, radialement, aux dents (41). La rotation du premier élément mobile (1) est réalisée autour d'un arbre (8) fixé dans un support (17) ou coulissant dans ce support (17).

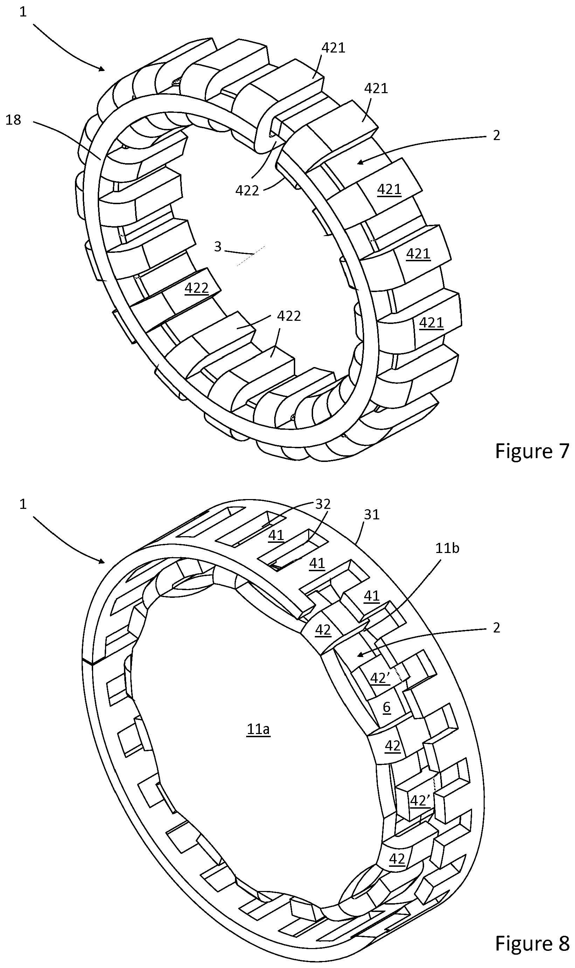

La figure 7 est une variante de réalisation pour laquelle le premier élément mobile (1) est sous la forme d'un anneau ferromagnétique (18) prolongé axialement de manière périodique par des couples de dents (421, 422) formant un entrefer dans lequel est placé le deuxième élément fixe (2) sous la forme d'une bague aimantée (6) multipolaire aimantée, de manière préférentielle, radialement. Dans cet exemple, le premier élément mobile (1) peut être avantageusement réalisé sous la forme d'une bande de matière découpée dans une feuille de matière ferromagnétique puis pliée localement afin de réaliser les couples de dents (421, 422).

La figure 8 présente une variante où le premier élément mobile (1) est sous la forme d'une couronne (31) présentant périodiquement des évidements (32) pour former des dents (41) périodiquement espacées. Sur la représentation, une partie de la couronne (31) n'est pas représentée pour mieux apprécier le deuxième élément fixe (2) sous la forme d'un aimant (6) dont l'orientation magnétique est axiale selon l'axe (3), entre deux disques (11a, 11b) en matériau ferromagnétique doux. Ces disques (11a, 11b) sont prolongés axialement par des dents (42, 42') -par exemple les dents (42) sont des pôles nord et les dents (42') des pôles sud- afin que les dents (42, 42') soient en vis-à-vis les unes des autres et soient toutes en face, radialement, de la couronne (31). Toutes les dents (41, 42, 42') forment des pôles magnétiques qui collaborent ensemble pour former une interaction magnétique et créer un crantage ressenti par l'utilisateur qui manipule la couronne (31).

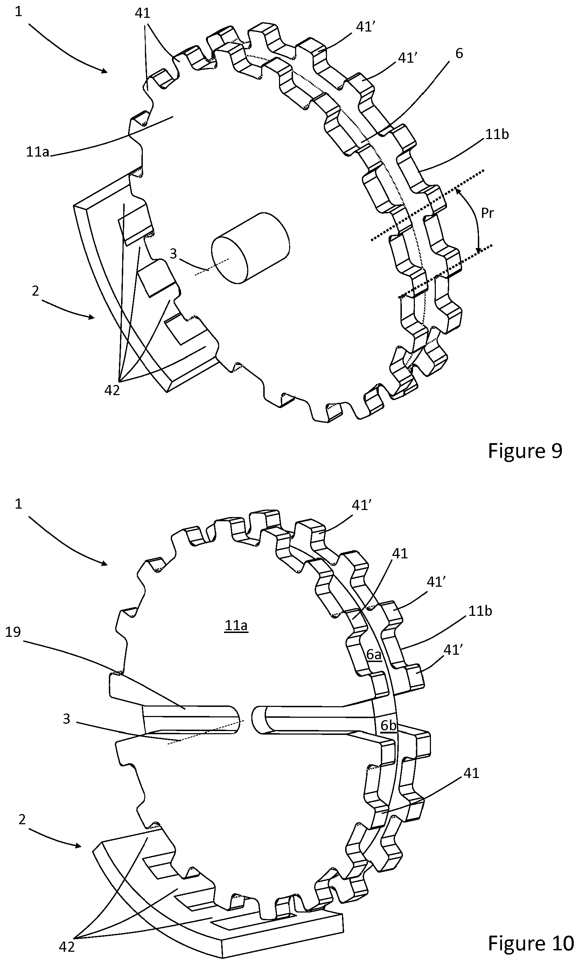

La figure 9 illustre une variante de réalisation montrant que l'invention, dans les cas rotatifs, n'est pas limitée à des éléments s'étendant sur 360°. Le premier élément mobile (1) présente un aimant (6) cylindrique aimanté axialement et placé entre deux disques (11a, 11b) prolongés radialement par des dents (41, 41') formant une alternance de pôles magnétiques Nord et Sud. Par exemple, les dents (41) du disque (11a) ont une polarité Nord et les dents (41') ont une polarité Sud imposées par l'aimant (6), les dents (41, 41') étant alignées axialement. Dans cet exemple, il y a 18 dents (41) et 18 dents (41') afin de réaliser 18 paires de pôles magnétiques définissant un pas polaire Pr. Si l'on souhaite réaliser 72 crans ressentis par l'utilisateur, il est possible d'utiliser un deuxième élément fixe (2) avec 24 dents (42) en matériau ferromagnétique doux, comme expliqué plus haut. Cependant, il n'est pas nécessaire de garder ces 24 dents pour réaliser 72 crans ressentis. En effet, l'amplitude du couple ressenti est proportionnel au plus grand commun diviseur (PGCD) qui représente le nombre de motifs présents dans l'interaction entre les deux éléments (1, 2). Dans le présent exemple, pour réaliser 72 crans, le PGCD est de 6, ce qui signifie qu'il y a potentiellement une succession de 6 motifs générant le couple. Il est alors possible d'utiliser un seul motif pour l'un des éléments, soit 24/6=4 dents (42) sur le deuxième élément fixe (2), ou tout multiple de 4 dents (42). Sur cet exemple, 1 motif -et donc 4 dents (42)- est utilisé sur une extension angulaire de 60°. L'amplitude du couple ressenti est proportionnelle au nombre de motifs, ce qui implique un effort ressenti moins important sur cet exemple que dans le cas où un deuxième élément fixe (2) complet s'étendant sur 360° est utilisé.

En figure 10 est présentée une variante de réalisation de cette figure 9 qui diffère de cette dernière en ce que l'aimant permanent (6a, 6b) utilisé est bipolaire, toujours aimanté axialement -non visible sur la figure- l'aimant (6a) présentant une polarité axiale donnée, l'aimant (6b) présentant une polarité axiale opposée. Une fente (19) traverse le disque (11a) afin de réaliser une coupure magnétique et favoriser les fuites de champ magnétique hors du disque (11a), l'étendue diamétrale de la fente étant parallèle à la transition magnétique de l'aimant (6a, 6b). Le disque (11b) présente 2*9 dents (41') et le disque (11a) présente 2*9 dents (41). Le nombre total de dents (41, 41') par disque (11a, 11b) est toujours de 18 mais le flux magnétique de fuite, en face axialement du disque (11a) peut être utilisé pour une fonction de détection de position lorsqu'une sonde magnétosensible (non montrée ici) est placée en regard du disque (11a).

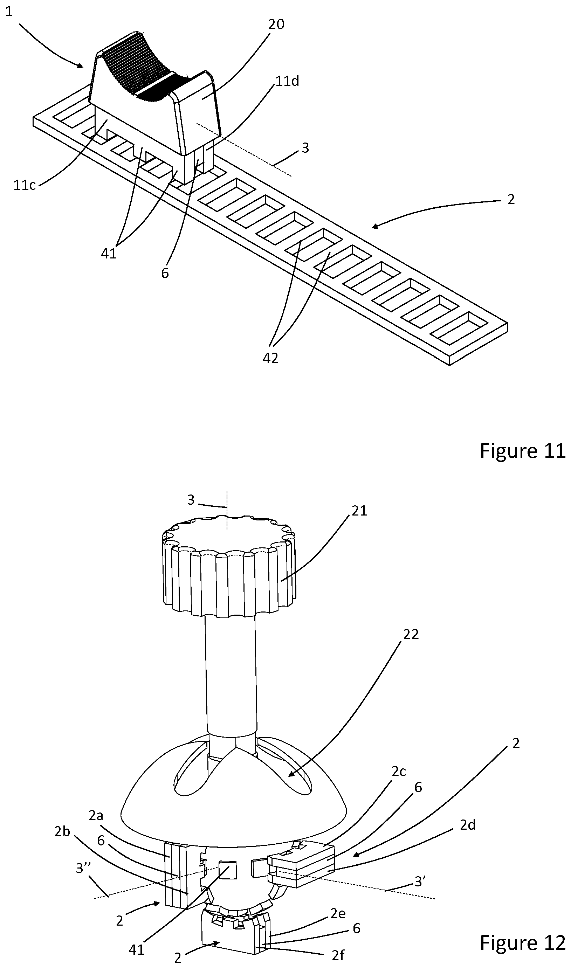

La figure 11 présente une variante linéaire d'un dispositif selon l'invention. Le premier élément mobile (1) est sous la forme d'un curseur (20) - de type « fader » pour table de mixage audio - solidaire d'un aimant (6) pris entre deux éléments dentés (11c, 11d) prolongés chacun et transversalement par 3 dents (41). Ces dents (41) sont en vis-à-vis d'une cible en matériau ferromagnétique doux formant le deuxième élément fixe (2) s'étendant linéairement et comprenant des dents (42) formant des barreaux et au-dessus duquel le curseur (20) se déplace selon l'axe (3), le premier élément mobile (1) étant séparé du deuxième élément fixe (2) par un entrefer maintenu par un guidage non représenté ici. Dans cet exemple, pour un crantage voulu dont le pas linéaire est Pt, en considérant un équivalent rotatif où l'on aurait 72 crans ressentis sur un tour complet avec un premier élément mobile (1) à 18 périodes magnétiques et un deuxième élément fixe (2) à 24 périodes magnétiques, la période linéaire des dents (41) du premier élément mobile (1) doit alors être égale à Pr=72/18*Pt et la période des pôles ferromagnétiques du deuxième élément fixe (2) doit alors être égale à Ps=72/24*Pt. Le PGCD de 18 et 24 étant 6, il y a donc un seul motif à 3 dents qui peut être utilisé au premier élément mobile (1). Si l'on souhaite par exemple obtenir un crantage tous les 1 mm, il faut que les dents (41) aient une périodicité de Pr=4 mm et les pôles ferromagnétiques du deuxième élément fixe (2) une périodicité de Ps=3 mm. Sur cette figure, le deuxième élément fixe (2) a une longueur d'environ 43 mm pour une course d'environ 33 mm et autant de crans ressentis par l'utilisateur.

La figure 12 présente une variante sphérique d'un dispositif selon l'invention permettant un ressenti haptique par l'utilisateur lors de la rotation d'un manche (21) actionnant une rotule (22), selon ici trois axes (3, 3' et 3") orthogonaux. Dans cet exemple non limitatif dans sa mise en forme, la rotule (22) présente une pluralité de pôles en matière ferromagnétique doux qui se déplacent, lors de l'actionnement du manche (21), devant trois paires d'éléments fixes (2), formés d'un empilement de tôles en matériaux ferromagnétique doux (22a, 22b), (22c, 22d) et (22e, 22f) de part et d'autre d'aimants permanents discrets (6), préférentiellement orientées perpendiculairement auxdites tôles (22a, 22b), (22c, 22d) et (22e, 22f) qui sont prolongées radialement par des dents (42) en regard de la rotule (22) afin d'interagir magnétiquement avec ladite rotule (22), cette dernière étant séparée des éléments fixes (2) par un faible entrefer radial. Le guidage de la rotule (22) est réalisé par un élément additionnel non montré ici. Le dimensionnement de cette variante se fera sur la base des enseignements de la variante de la figure 11.

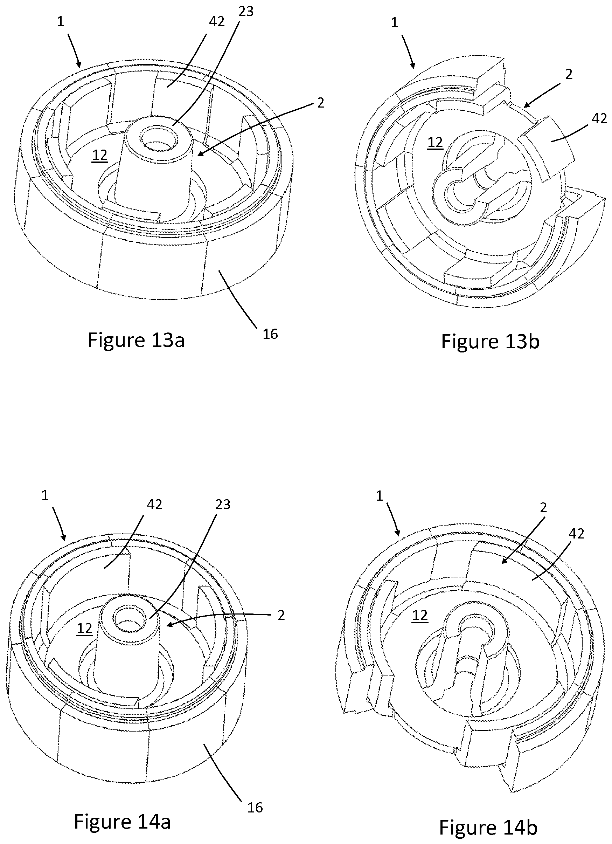

Les figures 13a et 13b sont deux vues en perspective différentes d'un même exemple de réalisation, avec la figure 13 présentant une coupe partielle, assez similaire à celle de la figure 4, qui diffère de cette dernière par le nombre de pôles aimantés et sur le nombre de pôles ferromagnétiques. Dans cet exemple, le premier élément mobile (1) présente une couronne aimantée (16) à 8 polarités Nord-Sud orientées radialement et le deuxième élément fixe (2) présente une couronne (12) en matériau ferromagnétique prolongée axialement par 6 dents (42), les premier (1) et deuxième (2) éléments se faisant face radialement. Cette configuration permet de générer un effort à 24 périodes par tour. Un moyeu (23) est solidaire de la couronne (12) afin de permettre le guidage et la rotation du premier élément mobile (1) relativement au deuxième élément fixe (2). De même manière que dans les exemples précédents, l'élément mobile peut devenir fixe et l'élément fixe peut devenir mobile, le mouvement relatif étant le même.

Les figures 14a et 14b sont en tous points similaires aux figures 13a et 13b, si ce n'est que le deuxième élément fixe (2) présente seulement 3 dents (42) prolongeant la couronne ferromagnétique (12). Le nombre de crantages obtenu est ainsi le même, soit 24, mais selon une amplitude de l'effort obtenu moins importante, du fait du nombre plus faible d'interaction magnétique, par une réluctance magnétique globale plus forte.

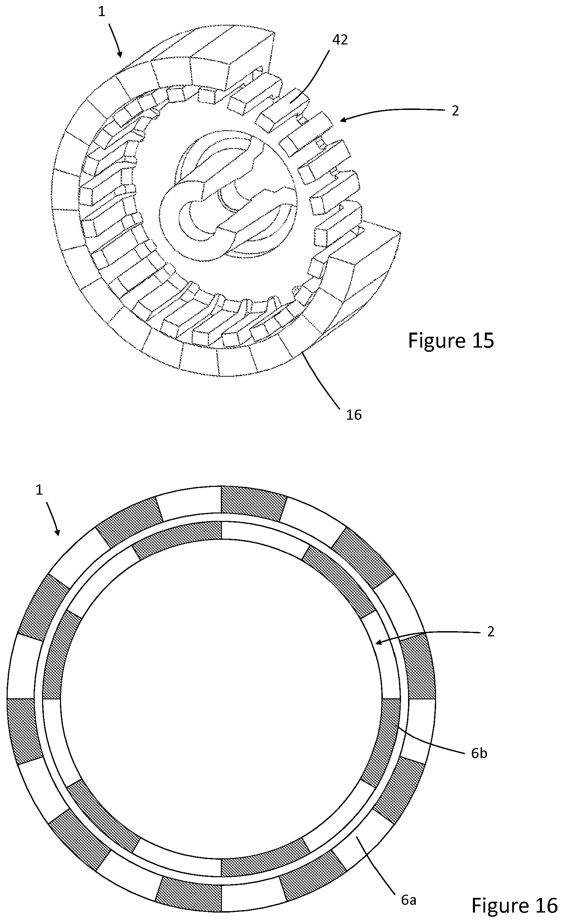

La figure 15 montre un exemple de réalisation semblable à celle de la figure 4 pour lequel le premier (1) et le deuxième (2) éléments comportent chacun 24 pôles afin de réaliser 24 crans.

La figure 16 montre un dernier exemple de réalisation dont le premier élément mobile (1) et le deuxième élément fixe (2) comprennent un aimant permanent, respectivement (6a) et (6b). Dans cet exemple non limitatif, il y a 20 polarités pour l'aimant (6a), préférentiellement orientées radialement, et 12 polarités pour l'aimant (6b), afin de réaliser 60 crantages.

## Revendications

1. Interface haptique passive comprenant un premier élément mobile (1) en rotation ou en translation par rapport à un deuxième élément (2), ledit premier élément mobile (1) tournant ou se déplaçant en regard dudit deuxième élément (2), le premier élément mobile (1) présente une première pluralité de pôles magnétiques périodiquement espacés selon un pas polaire Ps et selon la direction de déplacement, ledit deuxième élément fixe (2) présentant une deuxième pluralité de pôles magnétiques périodiquement espacés selon un pas polaire Pr et selon la direction de déplacement, où Ps et Pr sont des nombres différents l'un de l'autre, un effort périodique étant créé par l'interaction magnétique entre lesdits premier élément mobile (1) et deuxième élément fixe (2) selon une période Pt, ledit premier élément mobile (1) est en rotation autour d'un axe (3) ou en translation suivant un axe (3), ledit premier élément mobile (1) tournant ou se déplaçant en regard d'un deuxième élément fixe (2), ledit premier élément mobile (1) présentant une première pluralité de pôles magnétiques périodiquement espacés selon un pas polaire Ps et selon la direction de déplacement, ledit deuxième élément fixe (2) présentant une deuxième pluralité de pôles magnétiques périodiquement espacés selon un pas polaire Pr et selon la direction de déplacement, où Ps et Pr sont des nombres différents l'un de l'autre, un effort périodique étant créé par l'interaction magnétique entre lesdits premier élément mobile (1) et deuxième élément fixe (2) selon une période Pt **caractérisée en ce que** Ps et Pr sont choisis tels que Pt est strictement inférieur au plus petit des pas Ps et Pr.

2. Interface haptique rotative passive selon la revendication 1 **caractérisée en ce que** le nombre de périodes dudit effort périodique est égal au plus petit commun multiple des nombres de périodes de pôles magnétiques audit premier élément mobile (1) et audit deuxième élément fixe (2).

3. Interface haptique rotative passive selon la revendication 2 **caractérisée en ce que** l'un desdits premier élément mobile (1) ou deuxième élément fixe (2) comprend un aimant permanent (6) cylindrique présentant une alternance de pôles Nord et Sud formant ladite première pluralité de pôles magnétiques, **en ce que** l'autre desdits premier élément mobile (1) ou deuxième élément fixe (2) présente une pluralité de dents (41, 42) reliées par une couronne (12) et formant ladite deuxième pluralité de pôles magnétiques, lesdites dents (41, 42) et couronne (12) étant en un matériau ferromagnétique doux, ladite période Pt d'interaction magnétique étant au moins deux fois inférieure au plus petit des pas Ps et Pr.

4. Interface haptique rotative passive selon la revendication 1 **caractérisée en ce que** ledit premier élément mobile (1) et ledit deuxième élément fixe (2) comprennent un aimant permanent (6) présentant une alternance de pôles Nord et Sud formant lesdits pas polaires Ps et Pr.

5. Interface haptique passive rotative selon la revendication 1 **caractérisée en ce que** le deuxième élément fixe (2) comprend un aimant (6) présentant une aimantation unidirectionnelle orientée selon ledit axe (3) et **en ce qu'**il comprend de part et d'autre, axialement, deux disques (7a, 7b) ferromagnétiques en fer doux prolongés radialement et chacun par une pluralité 2π/Ps de dents (42) périodiques espacées dudit pas polaire Ps exprimé en radians.

6. Interface haptique passive rotative selon la revendication 1 **caractérisée en ce que** le deuxième élément fixe (2) comprend un aimant (6) présentant une aimantation unidirectionnelle orientée selon ledit axe (3) et **en ce qu'**il comprend de part et d'autre, axialement, deux disques ferromagnétiques (7a, 7b) en fer doux prolongés radialement et chacun par une pluralité 2π/(2*Ps) de dents périodiques espacées dudit pas polaire Ps multiplié par 2 et espacées entre chaque disque dudit pas Ps exprimé en radians.

7. Interface haptique passive rotative selon la revendication 1 **caractérisée en ce que** le premier élément mobile (1) comprend deux disques (11a, 11b) de part et d'autre, axialement, d'un aimant permanent unipolaire (6) et **en ce que** le deuxième élément fixe (2) comprend un disque (7) en un matériau ferromagnétique doux, lesdits disques (11a, 11b et 7) étant chacun prolongés radialement par des dents, respectivement (41, 42), en regard radialement et espacées par ledit pas Ps.

8. Interface haptique passive linéaire selon la revendication 1 **caractérisée en ce que** ledit premier élément mobile (1) comprend un aimant permanent aimanté transversalement au mouvement dudit premier élément mobile (1) selon ledit axe (3) et positionné transversalement entre deux éléments dentés (11c) en un matériau ferromagnétique doux présentant des dents (41) et **en ce que** le deuxième élément fixe (2) est en matériau ferromagnétique comprenant des dents (42) formant des barreaux et s'étendant linéairement, ledit premier élément fixe (1) se déplaçant linéairement au-dessus du deuxième élément fixe (2).

9. Interface haptique passive sphérique selon la revendication 1 **caractérisée en ce que** ledit premier élément mobile (1) comprend une rotule (22) capable de se déplacer en rotation autour de trois axes orthogonaux (3, 3', 3"), **en ce que** ladite rotule (22) comprend un ensemble de dents (41) s'étendant radialement, **en ce que** le deuxième élément fixe (2) est formé d'une pluralité d'éléments fixes (2) sous la forme d'un empilement de tôles (22a à 22f) en matériau ferromagnétique doux de part et d'autres d'aimants permanents discrets (6) orientés perpendiculairement audites tôles (22a à 22f), lesdites tôles (22a à 22f) étant prolongées radialement par des dents (42) en regard de ladite rotule (22).

10. Interface haptique passive rotative selon la revendication 1 **caractérisée en ce qu'**un premier élément mobile (1) comprend une couronne d'aimants permanents (6) s'étendant axialement solidaire d'une partie discale (13), ladite partie discale (13) étant prolongée axialement dans une direction opposée auxdits aimants (6) par un plateau (14) aimanté utilisé pour la détection de position dudit premier élément mobile (1), et **en ce qu'**un deuxième élément fixe (2) comprend une couronne (12) en un matériau ferromagnétique doux prolongée par des dents (41) en vis-à-vis de ladite couronne d'aimants permanents (6).

11. Interface haptique passive rotative selon la revendication précédente **caractérisée en ce que** ladite couronne d'aimants (6), ladite partie discale (13) et ledit plateau (14) aimanté sont réalisés dans un seul matériau à liant plastique injecté qui peut s'aimanter de manière permanente.

12. Interface haptique passive rotative selon la revendication 10 **caractérisée en ce que** ladite partie discale (13) est réalisée en un matériau à liant plastique injecté sur lequel est fixé solidairement ledit plateau (14) aimanté.

13. Interface haptique passive rotative selon la revendication 12 **caractérisée en ce que** ledit plateau (14) est en un matériau à liant plastique injecté sur ladite partie discale (13).

## Patentansprüche

1. Passive haptische Schnittstelle, umfassend ein erstes bewegbares Element (1), das relativ zu einem zweiten Element (2) rotierbar oder translatorisch bewegbar ist, wobei das erste bewegbare Element (1) eine erste Vielzahl von Magnetpolen, die entlang eines Polschritts Ps und entlang der Verschiebungsrichtung periodisch beabstandet sind, aufweist, wobei das zweite feste Element (2) eine zweite Vielzahl von Magnetpolen, die entlang eines Polschritts Pr und entlang der Verschiebungsrichtung periodisch beabstandet sind, aufweist, wobei Ps und Pr voneinander unterschiedliche Zahlen sind, wobei eine periodische Kraft durch die magnetische Wechselwirkung zwischen dem ersten bewegbaren Element (1) und dem zweiten festen Element (2) während einer Periode Pt hergestellt wird, wobei das erste bewegbare Element (1) um eine Achse (3) rotiert oder sich entlang einer Achse (3) translatorisch bewegt, wobei sich das erste bewegbare Element (1) gegenüber einem zweiten festen Element (2) dreht oder verschiebt, wobei das erste bewegbare Element (1) eine erste Vielzahl von Magnetpolen, die entlang eines Polschritts Ps und entlang der Verschiebungsrichtung periodisch beabstandet sind, aufweist, wobei das zweite feste Element (2) eine zweite Vielzahl von Magnetpolen aufweist, die entlang eines Polschritts Pr und entlang der Verschiebungsrichtung periodisch beabstandet sind, wobei Ps und Pr voneinander unterschiedliche Zahlen sind, wobei eine periodische Kraft durch die magnetische Wechselwirkung zwischen dem ersten bewegbaren Element (1) und dem zweiten festen Element (2) während einer Periode Pt hergestellt wird, **dadurch gekennzeichnet, dass** Ps und Pr derart gewählt sind, dass Pt streng kleiner als der kleinste der Schritte Ps und Pr ist.

2. Passive rotierende haptische Schnittstelle nach Anspruch 1,
**dadurch gekennzeichnet, dass** die Zahl von Perioden der periodischen Kraft gleich dem kleinsten gemeinsamen Vielfachen der Zahlen von Perioden von Magnetpolen an dem ersten bewegbaren Element (1) und an dem zweiten festen Element (2) ist.

3. Passive rotierende haptische Schnittstelle nach Anspruch 2,
**dadurch gekennzeichnet, dass** eines des ersten bewegbaren Elements (1) oder des zweiten festen Elements (2) einen zylindrischen Permanentmagneten (6), der eine Abwechslung von Nord- und Südpolen aufweist, die die erste Vielzahl von Magnetpolen ausbilden, umfasst, **dass** das andere des ersten bewegbaren Elements (1) oder des zweiten festen Elements (2) eine Vielzahl von Zähnen (41, 42) aufweist, die durch einen Kranz (12) verbunden sind und die zweite Vielzahl von Magnetpolen ausbilden, wobei die Zähne (41, 42) und der Kranz (12) aus einem weichferromagnetischen Material sind, wobei die Periode Pt der magnetischen Wechselwirkung mindestens zwei Mal kleiner als der kleinere der Schritte Ps und Pr ist.

4. Passive rotierende haptische Schnittstelle nach Anspruch 1,
**dadurch gekennzeichnet, dass** das erste bewegbare Element (1) und das zweite feste Element (2) einen Permanentmagneten (6), der eine Abwechslung von Nord- und Südpolen aufweist, die die Polschritte Ps und Pr ausbilden, umfassen.

5. Passive rotierende haptische Schnittstelle nach Anspruch 1,
**dadurch gekennzeichnet, dass** das zweite feste Element (2) einen Magneten (6), der eine unidirektionale Magnetisierung aufweist, die entlang der Achse (3) ausgerichtet ist, umfasst, und **dadurch, dass** es auf beiden Seiten axial zwei ferromagnetische Scheiben (7a, 7b) aus Weicheisen, die radial verlängert sind und jeweils eine Vielzahl von 2π/Ps von periodischen Zähnen (42) aufweisen, die um den Polschritt Ps, ausgedrückt in Radiant, beabstandet sind, umfasst.

6. Passive rotierende haptische Schnittstelle nach Anspruch 1,
**dadurch gekennzeichnet, dass** das zweite feste Element (2) einen Magneten (6), der eine unidirektionale Magnetisierung aufweist, die entlang der Achse (3) ausgerichtet ist, umfasst, und **dadurch, dass** es auf beiden Seiten axial zwei ferromagnetische Scheiben (7a, 7b) aus Weicheisen, die radial verlängert sind und jeweils eine Vielzahl von 2π/(2*Ps) von periodischen Zähnen aufweisen, die um den Polschritt Ps, multipliziert mit 2, beabstandet sind und zwischen jeder Scheibe des Schritts Ps, ausgedrückt in Radiant, beabstandet sind, umfasst.

7. Passive rotierende haptische Schnittstelle nach Anspruch 1,
**dadurch gekennzeichnet, dass** das erste bewegbare Element (1) zwei Scheiben (11a, 11b) axial auf beiden Seiten eines unipolaren Permanentmagneten (6) umfasst, und **dadurch, dass** das zweite feste Element (2) eine Scheibe (7) aus einem weichferromagnetischen Material umfasst, wobei die Scheiben (11a, 11b und 7) jeweils durch Zähne (41, 42) radial verlängert sind, die sich radial gegenüberliegen und um den Schritt Ps beabstandet sind.

8. Passive lineare haptische Schnittstelle nach Anspruch 1,
**dadurch gekennzeichnet, dass** das erste bewegbare Element (1) einen Permanentmagneten, der zu der Bewegung des ersten bewegbaren Elements (1) entlang der Achse (3) quer magnetisiert ist und zwischen zwei gezahnten Elementen (11c) aus einem weichferromagnetischen Material mit Zähnen (41) quer positioniert ist, umfasst, und **dadurch, dass** das zweite feste Element (2) aus einem ferromagnetischen Material ist, umfassend Zähne (42), die Stäbe ausbilden und sich linear erstrecken, wobei sich das erste feste Element (1) über dem zweiten festen Element (2) linear verschiebt.

9. Passive kugelförmige haptische Schnittstelle nach Anspruch 1,
**dadurch gekennzeichnet, dass** das erste bewegbare Element (1) ein Kugelgelenk (22) umfasst, das fähig ist, sich um drei orthogonale Achsen (3, 3', 3") rotierend zu verschieben, **dass** das Kugelgelenk (22) eine Gruppe von sich radial erstreckenden Zähnen (41) umfasst, **dass** das zweite feste Element (2) aus einer Vielzahl von festen Elementen (2) in Form eines Stapels von Blechen (22a bis 22f) aus weichferromagnetischem Material auf beiden Seiten von diskreten Permanentmagneten (6) ausgebildet ist, die senkrecht zu den Blechen (22a bis 22f) ausgerichtet sind, wobei die Bleche (22a bis 22f) durch Zähne (42) radial verlängert sind, die dem Kugelgelenk (22) gegenüberliegen.

10. Passive rotierende haptische Schnittstelle nach Anspruch 1,
**dadurch gekennzeichnet, dass** ein erstes bewegbares Element (1) einen Kranz von Permanentmagneten (6) umfasst, der sich axial erstreckt, der mit einem Scheibenteil (13) fest verbunden ist, wobei das Scheibenteil (13) axial in eine den Magneten (6) entgegengesetzte Richtung durch eine magnetisierte Platte (14) verlängert ist, die zum Erfassen der Position des ersten bewegbaren Elements (1) verwendet wird, und **dass** ein zweites festes Element (2) einen Kranz (12) aus einem weichferromagnetischen Material, der durch Zähne (41) verlängert ist, die dem Kranz aus Permanentmagneten (6) zugewandt sind, umfasst.

11. Passive rotierende haptische Schnittstelle nach dem vorstehenden Anspruch,
**dadurch gekennzeichnet, dass** der Magnetkranz (6), das Scheibenteil (13) und die magnetisierte Platte (14) aus einem einzigen Material mit eingespritztem Kunststoffbindemittel, das dauerhaft magnetisiert werden kann, umgesetzt sind.

12. Passive rotierende haptische Schnittstelle nach Anspruch 10,
**dadurch gekennzeichnet, dass** das Scheibenteil (13) aus einem Material mit eingespritztem Kunststoffbindemittel, auf dem die magnetisierte Platte (14) fest verbunden befestigt ist, umgesetzt ist.

13. Passive rotierende haptische Schnittstelle nach Anspruch 12,
**dadurch gekennzeichnet, dass** die Platte (14) aus einem Material mit Kunststoffbindemittel ist, das auf dem Scheibenteil (13) eingespritzt ist.

## Claims

1. Passive haptic interface comprising a first element (1) rotatably or translatably movable with respect to a second element (2), said first movable element (1) rotating or moving in relation to said second element (2), the first movable element (1) having a first plurality of magnetic poles periodically spaced according to a pole pitch Ps and according to the direction of movement, said second fixed element (2) having a second plurality of magnetic poles periodically spaced according to a pole pitch Pr and according to the direction of movement, wherein Ps and Pr are different numbers from one another, a periodic stress being created by the magnetic interaction between said first movable element (1) and second fixed element (2) according to a period Pt, said first movable element (1) rotates about an axis (3) or moves in translation along an axis (3), said first movable element (1) rotating or moving in relation to a second fixed element (2), said first movable element (1) having a first plurality of magnetic poles periodically spaced according to a pole pitch Ps and according to the direction of movement, said second fixed element (2) having a second plurality of magnetic poles periodically spaced according to a pole pitch Pr and according to the direction of movement, wherein Ps and Pr are different numbers from one another, a periodic stress being created by the magnetic interaction between said first movable element (1) and second fixed element (2) according to a period Pt, **characterized in that** Ps and Pr are chosen such that Pt is strictly less than the smallest of the Ps and Pr pitches.

2. Passive rotary haptic interface according to claim 1, **characterized in that** the number of periods of said periodic stress is equal to the least common multiple of the numbers of periods of magnetic poles at said first movable element (1) and at said second fixed element (2).

3. Passive rotary haptic interface according to claim 2, **characterized in that** one of said first movable element (1) or said second fixed element (2) comprises a cylindrical permanent magnet (6) having an alternation of North and South poles forming said first plurality of magnetic poles, **in that** the other of said first movable element (1) or said second fixed element (2) has a plurality of teeth (41, 42) connected by a ring (12) and forming said second plurality of magnetic poles, said teeth (41, 42) and ring (12) being made of a soft ferromagnetic material, said period Pt of magnetic interaction being at least two times less than the smallest of the pitches Ps and Pr.

4. Passive rotary haptic interface according to claim 1, **characterized in that** said first movable element (1) and said second fixed element (2) comprise a permanent magnet (6) having an alternation of North and South poles forming said pole pitches Ps and Pr.

5. Rotary passive haptic interface according to claim 1,
**characterized in that** the second fixed element (2) comprises a magnet (6) having a unidirectional magnetization oriented along said axis (3) **and in that** it comprises, axially on either side, two ferromagnetic discs (7a, 7b) made of soft iron extended radially and each by a plurality 2π/Ps of teeth (42) periodically spaced by said pole pitch Ps expressed in radians.

6. Rotary passive haptic interface according to claim 1,
**characterized in that** the second fixed element (2) comprises a magnet (6) having a unidirectional magnetization oriented along said axis (3) **and in that** it comprises, axially on either side, two ferromagnetic discs (7a, 7b) made of soft iron extended radially and each by a plurality 2π/(2*Ps) of teeth periodically spaced by said pole pitch Ps multiplied by 2 and spaced between each disc by said pitch Ps expressed in radians.

7. Rotary passive haptic interface according to claim 1,
**characterized in that** the first movable element (1) comprises two discs (11a, 11b) axially on either side of a unipolar permanent magnet (6) **and in that** the second fixed element (2) comprises a disc (7) made of a soft ferromagnetic material, said discs (11a, 11b and 7) each being extended radially by teeth, respectively (41, 42), radially facing and spaced by said pitch Ps.

8. Linear passive haptic interface according to claim 1, **characterized in that** said first movable element (1) comprises a permanent magnet magnetized transversely to the movement of said first movable element (1) along said axis (3) and positioned transversely between two toothed elements (11c) made of a soft ferromagnetic material having teeth (41) **and in that** the second fixed element (2) is made of a ferromagnetic material comprising teeth (42) forming bars and extending linearly, said first fixed element (1) moving linearly above the second fixed element (2).

9. Spherical passive haptic interface according to claim 1,
**characterized in that** said first movable element (1) comprises a ball joint (22) capable of rotating about three orthogonal axes (3, 3', 3"), **in that** said ball joint (22) comprises a set of teeth (41) extending radially, **in that** the second fixed element (2) is formed by a plurality of fixed elements (2) in the form of a stack of metal sheets (22a to 22f) of soft ferromagnetic material on either side of discrete permanent magnets (6) oriented perpendicularly to said metal sheets (22a to 22f), said metal sheets (22a to 22f) being extended radially by teeth (42) in relation to said ball joint (22).

10. Rotary passive haptic interface according to claim 1,
**characterized in that** a first movable element (1) comprises a ring of permanent magnets (6) extending axially and secured to a disc part (13), said disc part (13) being extended axially in a direction opposite said magnets (6) by a magnetic plate (14) used for the position detection of said first movable element (1), **and in that** a second fixed element (2) comprises a ring (12) made of a soft ferromagnetic material extended by teeth (41) facing said ring of permanent magnets (6).

11. Rotary passive haptic interface according to the preceding claim,
**characterized in that** said ring of magnets (6), said disc part (13) and said magnetic plate (14) are made from a single injected plastics bonded material that can be permanently magnetized.

12. Rotary passive haptic interface according to claim 10,
**characterized in that** said disc part (13) is made from an injected plastics bonded material on which said magnetic plate (14) is securely attached.

13. Rotary passive haptic interface according to claim 12,
**characterized in that** said plate (14) is made from a plastics bonded material injected onto said disc part (13).
